(19) **Europäisches Patentamt**
**European Patent Office**
**Office européen des brevets**

(11) **EP 0 823 630 A1**

(12) **EUROPÄISCHE PATENTANMELDUNG**

(43) Veröffentlichungstag:
**11.02.1998 Patentblatt 1998/07**

(51) Int. Cl.⁶: **G01N 23/00**

(21) Anmeldenummer: **97113461.4**

(22) Anmeldetag: **05.08.1997**

(84) Benannte Vertragsstaaten:
**AT BE CH DE DK ES FI FR GB GR IE IT LI LU MC NL PT SE**
Benannte Erstreckungsstaaten:
**AL LT LV RO SI**

(30) Priorität: **06.08.1996 DE 19631668**

(71) Anmelder:
**Eberhard-Karls-Universität Tübingen**
**Universitätsklinikum**
**72076 Tübingen (DE)**

(72) Erfinder:
• **Buess, Gerhard**
  **D-72074 Tübingen (DE)**

• **Heeg, Peter**
  **D-72119 Ammerbuch (DE)**
• **Roth, Klaus**
  **D-75131 Ofterdingen (DE)**
• **Sieber, Jens-Peter**
  **D-75365 Calw-Altburg (DE)**
• **Schrimm, Hartwig**
  **D-71229 Leonberg (DE)**
• **Reichl, Rudolf**
  **D-72555 Metzingen (DE)**

(74) Vertreter:
**Witte, Alexander, Dr.-Ing. et al**
**Witte, Weller, Gahlert, Otten & Steil,**
**Patentanwälte,**
**Rotebühlstrasse 121**
**70178 Stuttgart (DE)**

(54) **Verfahren zum Bestimmen der Reinigungswirkung an gereinigten Gegenständen, Verfahren zum Bestimmen der Verunreinigung von zu reinigenden Gegenständen und Verwendung dieser Verfahren**

(57) Ein Verfahren dient zum Bestimmen der Reinigungswirkung an gereinigten Gegenständen, insbesondere medizinischen Instrumenten (20). Die Gegenstände werden mit einer radioaktiv markierten Anschmutzung (12') kontaminiert. Die nach erfolgter Reinigung an den Gegenständen verbliebene Anschmutzung wird gemessen. Hierzu wird die Intensität (I) der radioaktiven Strahlung entlang einer Zeitachse (17) gemessen. Die an dem Gegenstand vorhandene Masse ($m_2$) der verbliebenen Anschmutzung wird nach einer vorgegebenen Beziehung bestimmt.

Fig. 1A  Fig. 1B  Fig. 1C  Fig. 1D

Fig. 1E  Fig. 1F  Fig. 1G

**Beschreibung**

Die Erfindung betrifft ein Verfahren zum Bestimmen der Reinigungswirkung an gereinigten Gegenständen, bei dem die Gegenstände mit einer radioaktiv markierten Anschmutzung kontaminiert werden und die nach erfolgter Reinigung an den Gegenständen verbliebene Anschmutzung gemessen wird.

Die Erfindung betrifft ferner ein Verfahren zum Bestimmen der Verunreinigung von zu reinigenden Gegenständen, bei dem die Gegenstände mit einer radioaktiv markierten Anschmutzung kontaminiert werden und die nach erfolgter Kontamination an den Gegenständen vorhandene Anschmutzung gemessen wird.

Die Erfindung betrifft schließlich Verwendungen der vorstehend genannten Verfahren.

Bei bestimmten Anwendungsfällen von Reinigungen, vorzugsweise bei maschineller Reinigung, insbesondere bei der Reinigung medizinischer Instrumente oder bei der Reinigung von Teilen lebensmittelverarbeitender Maschinen oder pharmazeutischer Produktionsanlagen, werden erhöhte Anforderungen an die Reinigungswirkung gestellt. Hierdurch soll sichergestellt werden, daß beim nachfolgenden erneuten Einsatz der Gegenstände eine Übertragung von krankheitserzeugenden Erregern in jedem Falle ausgeschlossen ist.

Im klinischen Bereich wird der Schutz vor Krankheitserregern nicht durch eine dem Einsatz der Instrumente vorausgehende Reinigung erreicht, sondern durch die den Reinigungsprozeß abschließende Sterilisation. Die Aufgabe der Reinigung besteht darin, die Ausgangskeimbelastung der zu sterilisierenden Instrumente zu reduzieren, um die Sicherheit der Sterilisation, die sogenannte Sterilisationswahrscheinlichkeit, zu erhöhen. Ein weiteres Ziel der Reinigung besteht dabei in der Entfernung unerwünschter Materie, also in der Entfernung von Schmutz, um die Zugänglichkeit der zu behandelnden Oberflächen der Instrumente für das sterilisierende Agens zu optimieren.

Besonders problematisch ist in diesem Zusammenhang die Reinigung von sogenannten Rohrschaftinstrumenten, wie sie bei der minimalinvasiven Chirurgie eingesetzt werden. Derartige Instrumente sind mit einem langgestreckten rohrförmigen Schaft versehen, an dessen vorderem Ende ein Behandlungselement, beispielsweise eine Zange, angeordnet ist, während sich am rückwärtigen Ende die entsprechenden Betätigungseinrichtungen befinden, beispielsweise Betätigungshebel. Um die Behandlungselemente mit den Betätigungshebeln zu verbinden, ist im Rohrschaft eine entsprechende Stange, ein Bowdenzug oder dergleichen vorgesehen.

Beim Einsatz dieser medizinischen Instrumente wird der Rohrschaft z.B. durch die Bauchdecke des Patienten hindurchgeschoben, so daß mit den Behandlungselementen ein chirurgischer Eingriff an einem inneren Organ des Patienten vorgenommen werden kann. Die Behandlungselemente und der untere Bereich des Rohrschaftes geraten dabei mit Blut und anderen Flüssigkeiten in Berührung. Aufgrund der Kapillarwirkung innerhalb des Rohrschaftes steigen diese Flüssigkeiten im Rohrschaft hoch.

Nach der Operation werden die Instrumente in der Regel nicht sofort einer Reinigung unterzogen, weil sich die Reinigungseinrichtungen innerhalb eines Krankenhauses üblicherweise in einiger Entfernung von den Operationssälen befinden. Aufgrund der infolgedessen verstreichenden Zeit trocknet die Flüssigkeit an dem Instrument teilweise ein. Eine nachfolgende Reinigung des Instrumentes ist dann aus mehreren Gründen schwierig, weil einerseits die Hohlräume, Ringspalte und dergleichen, in die die Flüssigkeiten eingedrungen sind, äußerst schwer zugänglich sind und außerdem die Flüssigkeit aus den genannten Gründen bereits teilweise eingetrocknet sein kann und daher eine Reinigung auch insoweit erschwert wird.

Da es sich bei diesen Instrumenten andererseits um relativ teure Instrumente handelt, sollten diese aus Kostengründen wiederverwendet werden. Entsprechendes gilt auch für andere invasive Gerätschaften, beispielsweise für starre oder flexible Endoskope, insbesondere aber auch für solche Gerätschaften, die trotz ihres sehr hohen Preises heutzutage noch regelmäßig als Einmalartikel eingesetzt werden, beispielsweise Katheter.

Ähnliche Probleme stellen sich auch in anderen Bereichen, beispielsweise im Bereich der Lebensmitteltechnik und der Pharmazie, wenn sichergestellt werden muß, daß die mit den Lebensmitteln bzw. den pharmazeutischen Produkten in Kontakt geratenden Teile der verarbeitenden Maschinen nach jedem Arbeitszyklus sorgfältig gereinigt werden.

Man ist sich aus diesen Gründen bewußt, daß bereits bei der Konstruktion eines entsprechenden Gegenstandes, also beispielsweise bei der Konstruktion eines medizinischen Instrumentes für die minimalinvasive Chirurgie, dem Aspekt einer späteren Reinigung besondere Beachtung geschenkt werden muß. Es ist daher bekannt, derartige Instrumente bereits bei der Konstruktion unter reinigungstechnischen Gesichtspunkten zu optimieren. Es ist auch bekannt, die Instrumente zu diesem Zweck mit besonderen Einrichtungen, beispielsweise Spülkanälen und dergleichen, zu versehen.

Andererseits sind die Hersteller von Reinigungseinrichtungen (Waschmaschinen) bzw. von Reinigungsmitteln für derartige Gegenstände und Instrumente bestrebt, ihre Produkte immer weiter zu vervollkommnen, damit auch die genannten schwierigen Reinigungsprobleme an Rohrschaftinstrumenten gelöst werden können.

Vor diesem Hintergrund besteht ein Bedürfnis, ein Verfahren zur Verfügung zu haben, das es gestattet, die Reinigungswirkung objektiv und reproduzierbar festzustellen. Wenn ein solches Verfahren zur Verfügung steht, können einerseits die Konstrukteure derartiger Gegenstände und Instrumente ihre Konstruktionen unter fortlaufender Anwendung des Verfahrens immer weiter verfeinern bzw. die Konstrukteure von Reinigungseinrichtungen ihre Einrichtungen unter fortgesetztem Einsatz des Verfahrens immer weiter verbessern. Im erstgenannten Fall setzt dies voraus, daß aufeinanderfolgende Messungen unterschiedlich konstruierter Gegenstände und Instrumente mit den selben Reinigungsverfahren bzw. Reinigungsmitteln behandelt werden, während im zweitgenannten Fall die zu optimierenden Reinigungsverfahren bzw. Reinigungsmittel zweckmäßigerweise immer an den selben Referenzinstrumenten durchgeführt werden.

Aus der DE-Z "Zentral Sterilisation", 2 (1994), Seiten 313-324 ist eine Methode zur Validierung und Überprüfung der Reinigung von Rohrschaftinstrumenten bekannt.

Bei dem bekannten Verfahren werden Rohrschaftinstrumente mit radioaktiv markiertem Blut angeschmutzt, und die Verteilung der so erzeugten Testkontamination wird vor und nach der Reinigung topografisch bestimmt. Zu diesem Zweck werden Rohrschaftinstrumente in einem Versuchsaufbau mit Blut angeschmutzt, das zuvor mit radioaktivem $99^m$ Technetium versehen wurde. Zu diesem Zweck werden zunächst Makroalbumine mit dem radioaktiven Technetium versehen und die dann radioaktiven Makroalbumine mit frisch entnommenem, also gerinnbarem Blut vermischt. Mittels einer $\gamma$-Kamera werden die auf diese Weise angeschmutzten Rohrschaftinstrumente vermessen, dann gespült und schließlich ein weiteres Mal vermessen. Die Messungen werden dabei als Impulse pro Zeit (counts/s) durchgeführt. Die Reinigungswirkung wird durch den Quotienten der Meßwerte vor und nach dem Reinigen ermittelt. Dabei wird die natürliche Halbwertszeit des Technetiums (ca. 6 Std.) eingerechnet.

Das bekannte Verfahren gestattet nur relative Aussagen, nicht jedoch absolute Aussagen hinsichtlich der tatsächlich vorhandenen Masse der Restverschmutzung. Eine unmittelbare Umrechnung der gemessenen Impulse/Zeit in Masseeinheiten ist ebenfalls nicht ohne weiteres möglich, weil das Verhalten der radioaktiv markierten Makroalbumine, insbesondere in Verbindung mit der metallischen Umgebung, nicht im einzelnen bekannt ist. Auch das Dissoziationsverhalten von Technetium ist in diesem Zusammenhang nicht im einzelnen bekannt. Aufgrund dessen kann es zu Fehlmessungen kommen, weil trotz des Vorhandenseins einer relativ großen Masse an Restverschmutzung nur eine relativ kleine Strahlung (Impulse/Zeit) gemessen wird.

Der Erfindung liegt demgegenüber die Aufgabe zugrunde, ein Verfahren der eingangs genannten Art dahingehend weiterzubilden, daß reproduzierbare Ergebnisse erhalten werden, die es insbesondere gestatten, die tatsächlich noch vorhandene Masse an Restverschmutzung oder überhaupt an Verschmutzung quantitativ zu erfassen, und zwar unabhängig von der jeweils vorhandenen Ausgangsstrahlung zu Anbeginn des Verfahrens.

Diese Aufgabe wird bei dem Verfahren der eingangs als erstes genannten Art erfindungsgemäß durch die folgenden Verfahrensschritte gelöst:

a) Bereitstellen einer vorbestimmten Anschmutzungssubstanz;

b) Zugeben einer radioaktiven Markierungssubstanz zu der Anschmutzungssubstanz, wobei die radioaktive Markierungssubstanz eine Halbwertszeit (T) hat, und ferner die Substanzen zusammen eine erste Masse ($m_0$) haben;

c) Messen der ersten Masse ($m_0$);

d) gleichzeitiges Messen einer ersten Intensität ($I_0$) der Strahlung der mit der radioaktiven Markierungssubstanz versetzten Anschmutzungssubstanz und Starten einer Zeitmessung (t);

e) mindestens teilweises Einbringen des Gegenstandes in die mit der radioaktiven Markierungssubstanz versehene Anschmutzungssubstanz, derart, daß eine zweite Masse ($m_1$) der mit der radioaktiven Markierungssubstanz versehenen Anschmutzungssubstanz in mindestens einen Teil des Gegenstandes eingebracht und dieser damit kontaminiert wird;

f) Reinigen des kontaminierten Gegenstandes;

g) Messen einer dritten Intensität ($I_2$) der Strahlung des gereinigten Gegenstandes und Erfassen des Zeitpunktes ($T_2$) dieser Messung; und

h) Bestimmen einer dritten Masse ($m_2$) der am Gegenstand nach dem Reinigen verbliebenen Anschmutzung nach der Beziehung:

$$m_2 = \frac{I_2}{I_0}\, r_{(t,\dots)}\, m_0\, e^{(t_2/T)\ln 2}$$

wobei $r_{(t,\dots)}$ eine vorbestimmte Proportionalitätsfunktion zur Berücksichtigung des Dissoziationsverhaltens der Bindung zwischen der Markierungssubstanz und dem als Träger wirkenden Gegenstand ist.

Die Aufgabe wird bei dem Verfahren der eingangs als zweites genannten Art durch die folgenden Verfahrensschritte gelöst:

a) Bereitstellen einer vorbestimmten Anschmutzungssubstanz;

b) Zugeben einer radioaktiven Markierungssubstanz zu der Anschmutzungssubstanz, wobei die radioaktive Markierungssubstanz eine Halbwertszeit (T) hat, und ferner die Substanzen zusammen eine erste Masse ($m_0$) haben;

c) Messen der ersten Masse ($m_0$);

d) gleichzeitiges Messen einer ersten Intensität ($I_0$) der Strahlung der mit der radioaktiven Markierungssubstanz versetzten Anschmutzungssubstanz und Starten einer Zeitmessung (t);

e) mindestens teilweises Einbringen des Gegenstandes in die mit der radioaktiven Markierungssubstanz versehenen Anschmutzungssubstanz, derart, daß eine zweite Masse ($m_1$) der mit der radioaktiven Markierungssubstanz versehenen Anschmutzungssubstanz in mindestens einen Teil des Gegenstandes eingebracht und dieser damit kontaminiert wird;

f) Messen einer zweiten Intensität ($I_1$) der Strahlung der zweiten Masse ($m_1$) an dem kontaminierten Gegenstand und Erfassen des Zeitpunktes ($t_1$) dieser Messung; und

g) Bestimmen der zweiten Masse ($m_1$) nach der Beziehung:

$$m_1 = \frac{I_1}{I_0}\, r_{(t,...)}\, m_0\, e^{(t_1/T)\ln 2}$$

wobei $r_{(t,...)}$ eine vorbestimmte Proportionalitätsfunktion zur Berücksichtigung des Dissoziationsverhaltens der Bindung zwischen der Markierungssubstanz und dem als Träger wirkenden Gegenstand ist.

Die der Erfindung zugrunde liegenden Aufgabe wird auf diese Weise vollkommen gelöst. Bei dem vorstehend zuerst genannten Ausführungsbeispiel des erfindungsgemäßen Verfahrens wird diejenige Masse ($m_2$) exakt bestimmt, die nach dem Reinigen am Gegenstand noch vorhanden ist. In entsprechender Weise wird bei dem als zweites genannten Ausführungsbeispiel des erfindungsgemäßen Verfahrens diejenige Masse ($m_1$) bestimmt, die an dem Gegenstand vorhanden ist, bevor dieser einer Reinigung unterzogen wird.

In beiden Fällen erhält man einen absoluten Zahlenwert für die Masse, wobei dieser Wert bei jeder sinnvollerweise zu verwendenden Ausgangsstrahlung einzeln bestimmt werden kann.

Bei einer bevorzugten Weiterbildung der Erfindung werden die beiden zuvor erörterten Ausführungsbeispiele miteinander verbunden, und es wird der Quotient ($m_2/m_1$) der beiden Massen gebildet. Auf diese Weise erhält man einen exakten Kennwert für die Reinigungswirkung, wobei aufgrund dieses Kennwertes entweder die Konstruktion des Gegenstandes oder die Art und Weise des Reinigungsvorganges bzw. des Reinigungsmittels optimiert werden kann, wenn die jeweils anderen Parameter konstant gehalten werden.

Bei einer weiteren bevorzugten Ausgestaltung der Erfindung wird mindestens eine der Intensitäten ($I_1$, $I_2$) der Strahlung der zweiten Masse ($m_1$) oder der dritten Masse ($m_2$) ortsauflösend am Gegenstand gemessen.

Durch diese an sich bekannte Maßnahme wird erreicht, daß man das Reinigungsverhalten an besonders kritischen Stellen selektiv erfassen kann, beispielsweise an Engstellen, an Gelenken oder dergleichen.

Zu diesem Zwecke werden vorzugsweise die Intensitäten ($I_1$, $I_2$) der Strahlung der zweiten Masse ($m_1$) oder der dritten Masse ($m_2$) mittels einer auf die radioaktive Strahlung ansprechenden Kamera gemessen, wobei die Strahlung vorzugsweise eine $\gamma$-Strahlung ist, wie dies an sich bekannt ist.

Es wurde bereits erwähnt, daß die erfindungsgemäßen Verfahren für unterschiedlichste Anwendungen einsetzbar sind. Ein bevorzugter Anwendungsbereich ist das Gebiet der medizinischen Instrumente, insbesondere der Rohrschaftinstrumente für die minimalinvasive Chirurgie.

Einen medizinisch bedeutsamen Anwendungsbereich stellt - neben Rohrschaftinstrumenten - die Reinigung flexibler Endoskope und die Aufbereitung von intravasalen Kathetern, z.B. Herzkathetern, dar. Unter dem weiter zunehmenden Kostendruck im Gesundheitswesen dürfte vor allem die Validierung der Katheteraufbereitung anstelle von Einmalprodukten Bedeutung erlangen.

Daneben sind aber auch zahlreiche andere Anwendungen denkbar, beispielsweise bei Teilen von lebensmittelverarbeitenden Maschinen oder bei pharmazeutischen Anlagen.

Die erfindungsgemäßen Verfahren und Verwendungen beziehen sich bevorzugt auf Situationen, in denen die zu reinigenden Gegenstände maschinell gereinigt werden. Die Erfindung ist jedoch nicht auf diesen Fall beschränkt. Die Erfindung kann vielmehr auch vorteilhaft bei Anwendungsfällen eingesetzt werden, bei denen die Gegenstände manuell gereinigt werden.

Es wurde ferner bereits darauf hingewiesen, daß die erfindungsgemäßen Verfahren für unterschiedliche Zwecke verwendet werden können, nämlich einmal zum Optimieren der konstruktiv bedingten Reinigungsfähigkeit von medizinischen Instrumenten, andererseits aber auch zum Optimieren des konstruktiv bedingten Reinigungsverhaltens von Waschmaschinen für Gegenstände der hier interessierenden Art oder zum Optimieren von Reinigungsmitteln.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Figuren 1A bis 1G  in äußerst schematischer Darstellung verschiedene Schritte von Ausführungsformen erfindungsgemäßer Verfahren; und

Fig. 2  eine Seitenansicht, teilweise aufgebrochen, eines Teils einer Vorrichtung zur Durchführung des erfindungsgemäßen Verfahrens.

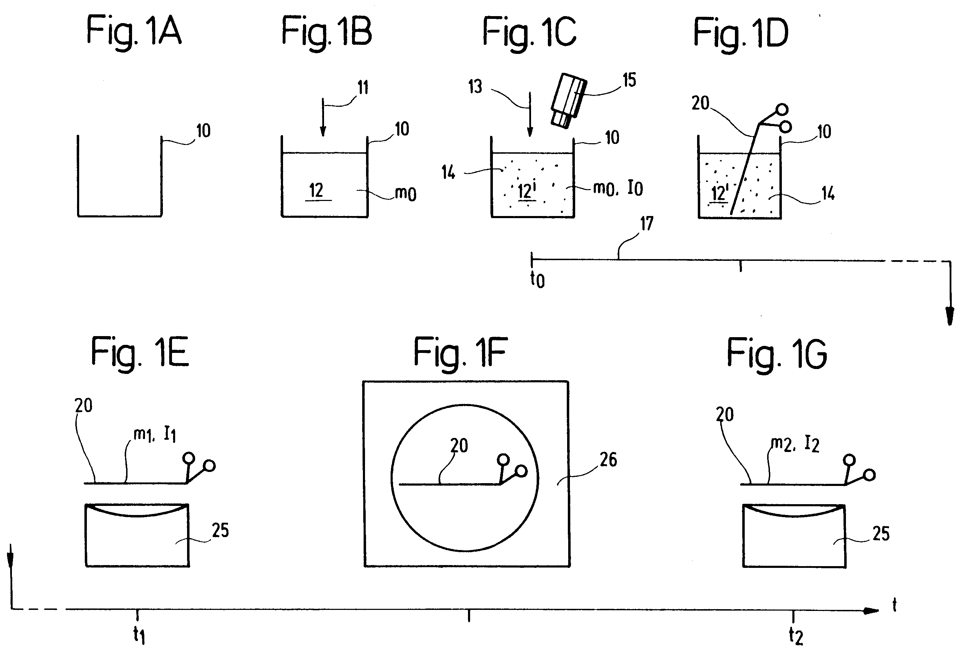

In Fig. 1A ist mit 10 ein Gefäß, beispielsweise ein Glasgefäß, bezeichnet. Das Gefäß hat vorzugsweise das Volumen eines üblichen Becherglases.

In Fig. 1B ist mit einem Pfeil 11 angedeutet, daß das Gefäß 10 mit einer Anschmutzungssubstanz, insbesondere einer Flüssigkeit, befüllt wird.

In Fig. 1C ist mit einem weiteren Pfeil 13 angedeutet, daß die Anschmutzungssubstanz 12 mit einer radioaktiven Markierung 14 versehen wird, so daß eine radioaktiv markierte Anschmutzungssubstanz 12' entsteht. Die radioaktiv markierte Anschmutzungssubstanz 12' hat eine Masse $m_0$, die mit geeigneten Mitteln, beispielsweise mit einer Waage oder dergleichen (nicht dargestellt), gemessen wird.

Die radioaktiv markierte Anschmutzungssubstanz 12' wird z.B. in an sich bekannter Weise dadurch hergestellt, daß Makroalbumine mit radioaktivem $99^m$ Technetium versehen und die nun radioaktiven Makroalbumine mit frisch entnommenem, also gerinnbarem Blut vermengt werden. Anstelle von Blut kann dabei z.B. auch Fibrinogen verwendet werden. Bei Anwendungen außerhalb des Bereiches medizinischer Instrumente wird der jeweils zu erwartende hartnäckigste Schmutz als Anschmutzungssubstanz eingesetzt, also beispielsweise Fett bei milchverarbeitenden Maschinen oder Eiweiß bei Geschirrspülmaschinen oder bei Maschinen zum Reinigen pharmazeutischer Geräte.

Wie in Fig. 1C ferner dargestellt ist, wird die radioaktiv markierte Anschmutzungssubstanz 12', deren Masse mit der hier interessierenden Genauigkeit immer noch mit $m_0$ angenommen werden kann, nun einer Strahlungsmessung unterzogen.

Hierzu wird z.B. ein Geigerzähler 15 eingesetzt, der die Intensität $I_0$ der Anfangsstrahlung mißt.

Wichtig ist dabei, daß zugleich mit der Durchführung der Strahlungsmessung eine fortlaufende Zeitmessung gestartet wird, wie ab Fig. 1C mit einer Zeitachse 17 angedeutet. Der Zeitpunkt, an dem die Messung der Anfangsstrahlung $I_0$ mittels des Geigerzählers 15 durchgeführt wird, wird mit $t_0 = 0$ angenommen.

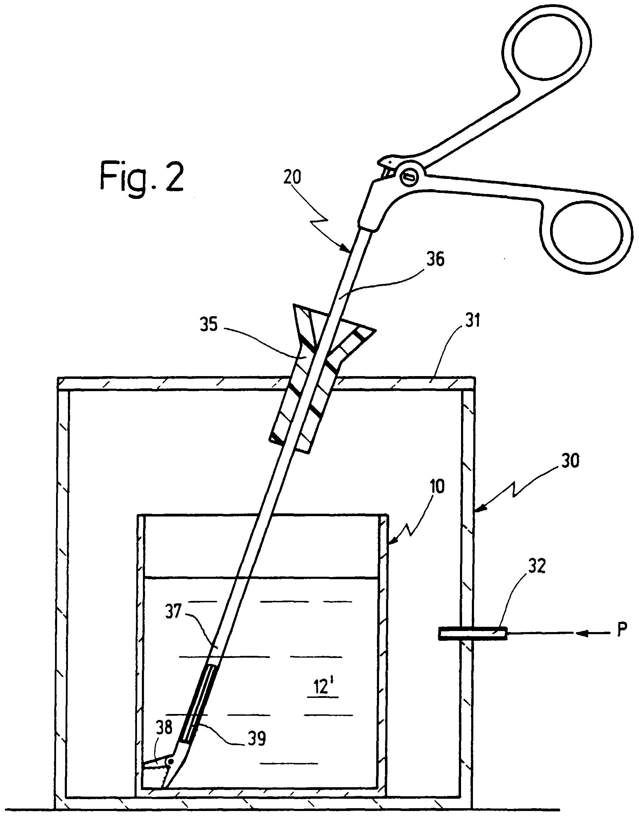

In Fig. 1D ist nun dargestellt, daß ein medizinisches Instrument 20 zumindest mit den bei Operationen im Eingriff befindlichen Teilen in die radioaktiv markierte Anschmutzungssubstanz 12' eingetaucht wird. Einzelheiten dazu werden weiter unten zu Fig. 2 noch erläutert werden.

Das auf diese Weise mit radioaktiv markierter Anschmutzungssubstanz 12' kontaminierte Instrument 20 wird nun gemäß Fig. 1E einer Messung mittels einer γ-Kamera 25 unterzogen. Die γ-Kamera 25 mißt die von dem Technetium ausgehende γ-Strahlung. Gleichzeitig mit der Messung der nun im Instrument 20 vorhandenen Strahlung $I_1$ wird die laufende Zeit mit $t_1$ gestoppt und festgehalten. Am Instrument 20 befindet sich dabei eine Masse $m_1$ der radioaktiv markierten Anschmutzungssubstanz 12'.

Wie in Fig. 1F dargestellt, wird, wie in Fig. 1G dargestellt, das verschmutzte Instrument 20 nun z.B. maschinell gereinigt, wie mit einer Waschmaschine 26 angedeutet.

Nach Abschluß des Waschvorganges wird das gereinigte Instrument 20 erneut mittels der γ-Kamera 25 vermessen. Am Instrument 20 befindet sich nun noch eine Masse $m_2$ der radioaktiv markierten Anschmutzungssubstanz 12'. Deren Strahlung $I_2$ wird gemessen und dabei gleichzeitig die laufende Zeit $t_2$ gestoppt und festgehalten.

Für die Durchführung des erfindungsgemäßen Verfahrens muß in jedem Fall die Ausgangsmasse $m_0$ der radioaktiv markierten Anschmutzungssubstanz 12' bekannt sein, ebenso wie die Halbwertszeit T des radioaktiven Markers.

Wenn nun nach einer ersten Variante der Erfindung (Fig. 1G) lediglich zum Zeitpunkt $t_2$ die Strahlung $I_2$ gemessen wird, kann die verbliebene Restmasse $m_2$ der Verschmutzung nach folgender Beziehung bestimmt werden:

$$m_2 = \frac{I_2}{I_0}\, r_{(t,\ldots)} m_0 e^{(t_2/T)\ln 2}$$

wobei $r_{(t,\ldots)}$ eine vorbestimmte Proportionalitätsfunktion zur Berücksichtigung des Dissoziationsverhalten der Bindung zwischen der Markierungssubstanz 14 und dem als Träger wirkenden Gegenstand ist.

Wenn die Markierung zum Beispiel zu 100 % fest am Träger sitzt, ist $r_{(t,\ldots)}$ eine Konstante, nämlich 1. Wenn dies nicht der Fall ist, müssen sowohl die Markierungssubstanz wie auch der Träger hinsichtlich ihrer Konzentration als Funktion der Zeit bestimmt werden. Verfahren zum Bestimmen dieses Dissoziationsverhaltens sind dem Fachmann bekannt. Aus dem speziellen Diffusionsverhalten bei einer bestimmten Markierungssubstanz im Verhältnis zu einem bestimmten Träger ergibt sich dann die entsprechende Proportionalitäts- oder Korrekturfunktion $r_{(t,...)}$, die u.a. eine Funktion der Zeit sein kann. Da sich in dieser Proportionalitäts- oder Korrekturfunktion verschiedene physikalische und chemische Prozesse überlagern können, die teilweise gegenläufig sein können, kann es infolge dieser individuellen chemischen Geschehen auch zu Unstetigkeiten kommen.

Wenn gemäß einer anderen Variante der Erfindung (Fig. 1E) lediglich zum Zeitpunkt $t_1$ die Strahlung $I_1$ gemessen wird, so läßt sich die an dem kontaminierten Instrument 20 vor Beginn der Reinigung vorhandene Masse $m_1$ der Verschmutzung wie folgt bestimmen:

$$m_1 = \frac{I_1}{I_0} \, r_{(t,...)} m_0 e^{(t_1/T)\ln 2}$$

wobei $r_{(t,...)}$ auch hier die erwähnte vorbestimmte Proportionalitätsfunktion ist.

Bei einer bevorzugten Kombination der beiden vorstehend genannten Verfahrensvarianten kann man die Reinigungswirkung als den Quotienten der beiden genannten Massen mit $m_2/m_1$ bestimmen.

Es versteht sich, daß die $\gamma$-Kamera 25 dabei alternativ die Gesamtstrahlung des Instruments 20 oder auch durch ortsauflösende Messung die Strahlung bestimmter Bereiche des Instruments 20 erfassen kann.

Fig. 2 zeigt die in Fig. 1D skizzierte Situation in weiteren Details.

Man erkennt, daß sich das Gefäß 10 innerhalb einer Druckkammer 30 befindet. Die Druckkammer 30 ist mittels eines Deckels 31 druckdicht verschlossen. Über ein Anschlußrohr 32 kann -beispielsweise mittels Preßluft - ein Überdruck p in das Innere der Druckkammer 30 eingeleitet werden.

Das medizinische Instrument 20 ist mittels einer druckdichten Durchführung 35 durch den Deckel 31 hindurchgeführt. Hierzu ragt ein Langschaft 36 des Instrumentes 20 druckdicht durch die Durchführung 35 hindurch.

Ein unterer Abschnitt 37 des Instrumentes 20 befindet sich innerhalb der radioaktiv markierten Anschmutzungssubstanz 12'. Dazu gehört insbesondere eine am freien Ende des unteren Abschnittes 37 vorhandene Zange 38 oder dergleichen. Aus dem Teilschnitt erkennt man, daß im Inneren des Langschaftes 36 Hohlräume vorhanden sind, beispielsweise ein Ringspalt zwischen der Wandung des Langschaftes 36 und einem darin angeordneten Betätigungselement für die Zange 38, beispielsweise einer Stange, eines Seilzuges oder dergleichen.

Die Wirkungsweise der Anordnung gemäß Fig. 2 ist wie folgt:

Um das Instrument 20 mit der radioaktiv markierten Anschmutzungssubstanz 12' zu versehen, wird das Instrument 20 mit dem Langschaft 36 durch die Durchführung 35 hindurchgesteckt und die Druckkammer 30 dann mittels des Deckels 31 druckdicht verschlossen.

Über das Anschlußrohr 32 wird nun der Überdruck p zugeführt. Dies bewirkt, daß die radioaktiv markierte Anschmutzungssubstanz 12' von unten in den Langschaft 36 hineingedrückt wird und dort den Hohlraum 39 bis zu einem bestimmten Niveau ausfüllt. Das Ausmaß des Überdrucks p und die Einwirkungsdauer werden dabei so festgelegt, daß das Instrument 20 nach Beendigung des Vorganges in dem Umfange verschmutzt ist, wie dies bei üblichen Operationen unter Zugrundelegung einer Worst-Case-Betrachtung der Fall ist.

## Patentansprüche

1. Verfahren zum Bestimmen der Reinigungswirkung an maschinell gereinigten Gegenständen, bei dem die Gegenstände mit einer radioaktiv markierten Anschmutzung kontaminiert werden und die nach erfolgter Reinigung an den Gegenständen verbliebene Anschmutzung gemessen wird, mit den Verfahrensschritten:

a) Bereitstellen einer vorbestimmten Anschmutzungssubstanz (12);

b) Zugeben einer radioaktiven Markierungssubstanz (14) zu der Anschmutzungssubstanz (12), wobei die radioaktive Markierungssubstanz (14) eine Halbwertszeit (T) hat, und ferner die Substanzen (12, 14) zusammen eine erste Masse ($m_0$) haben;

c) Messen der ersten Masse ($m_0$);

d) gleichzeitiges Messen einer ersten Intensität ($I_0$) der Strahlung der mit der radioaktiven Markierungssubstanz (14) versetzten Anschmutzungssubstanz (12) und Starten einer Zeitmessung (t);

e) mindestens teilweises Einbringen des Gegenstandes in die mit der radioaktiven Markierungssubstanz (14) versehene Anschmutzungssubstanz (12), derart, daß eine zweite Masse ($m_1$) der mit der radioaktiven Markierungssubstanz (14) versehenen Anschmutzungssubstanz (12) in mindestens einen Teil des Gegenstandes eingebracht und dieser damit kontaminiert wird;

f) Reinigen des kontaminierten Gegenstandes;

g) Messen einer dritten Intensität ($I_2$) der Strahlung des gereinigten Gegenstandes und Erfas-

sen des Zeitpunktes ($T_2$) dieser Messung; und

h) Bestimmen einer dritten Masse ($m_2$) der am Gegenstand nach dem Reinigen verbliebenen Anschmutzung nach der Beziehung:

$$m_2 = \frac{I_2}{I_0}\, r_{(t,\ldots)}\, m_0\, e^{(t_2/T)\ln 2}$$

wobei $r_{(t,\ldots)}$ eine vorbestimmte Proportionalitätsfunktion zur Berücksichtigung des Dissoziationsverhaltens der Bindung zwischen der Markierungssubstanz (14) und dem als Träger wirkenden Gegenstand ist.

2. Verfahren zum Bestimmen der Verunreinigung von zu reinigenden Gegenständen, bei dem die Gegenstände mit einer radioaktiv markierten Anschmutzung kontaminiert werden und die nach erfolgter Kontamination an den Gegenständen vorhandene Anschmutzung gemessen wird, mit den Verfahrensschritten:

a) Bereitstellen einer vorbestimmten Anschmutzungssubstanz (12);

b) Zugeben einer radioaktiven Markierungssubstanz (14) zu der Anschmutzungssubstanz (12), wobei die radioaktive Markierungssubstanz (14) eine Halbwertszeit (T) hat, und ferner die Substanzen (12, 14) zusammen eine erste Masse ($m_0$) haben;

c) Messen der ersten Masse ($m_0$);

d) gleichzeitiges Messen einer ersten Intensität ($I_0$) der Strahlung der mit der radioaktiven Markierungssubstanz (14) versetzten Anschmutzungssubstanz (12) und Starten einer Zeitmessung (t);

e) mindestens teilweises Einbringen des Gegenstandes in die mit der radioaktiven Markierungssubstanz (14) versehene Anschmutzungssubstanz (12), derart, daß eine zweite Masse ($m_1$) der mit der radioaktiven Markierungssubstanz (14) versehenen Anschmutzungssubstanz (12) in mindestens einen Teil des Gegenstandes eingebracht und dieser damit kontaminiert wird;

f) Messen einer zweiten Intensität ($I_1$) der Strahlung der zweiten Masse ($m_1$) an dem kontaminierten Gegenstand und Erfassen des Zeitpunktes ($t_1$) dieser Messung; und

g) Bestimmen der zweiten Masse ($m_1$) nach der Beziehung:

$$m_1 = \frac{I_1}{I_0}\, r_{(t,\ldots)}\, m_0\, e^{(t_1/T)\ln 2}$$

wobei $r(t,\ldots)$ eine vorbestimmte Proportionalitätsfunktion zur Berücksichtigung des Dissoziationsverhaltens der Bindung zwischen der Markierungssubstanz und dem als Träger wirkenden Gegenstand ist.

3. Verfahren nach Anspruch 1 und 2, dadurch gekennzeichnet, daß der Quotient ($m_2/m_1$) der dritten Masse ($m_2$) und der zweiten Masse ($m_1$) gebildet wird.

4. Verfahren nach einem oder mehreren der Ansprüche 1 bis 3, dadurch gekennzeichnet, daß mindestens eine der Intensitäten ($I_1$, $I_2$) der Strahlung der zweiten Masse ($m_1$) oder der dritten Masse ($m_2$) ortsauflösend am Gegenstand gemessen wird.

5. Verfahren nach Anspruch 4, dadurch gekennzeichnet, daß die Intensitäten ($I_1$, $I_2$) der Strahlung der zweiten Masse ($m_1$) oder der dritten Masse ($m_2$) mittels einer auf die radioaktive Strahlung ansprechenden Kamera gemessen werden.

6. Verfahren nach einem oder mehreren der Ansprüche 1 bis 5, dadurch gekennzeichnet, daß die radioaktive Markierungssubstanz (14) ein $\gamma$-Strahler ist.

7. Verfahren nach einem oder mehreren der Ansprüche 1 bis 6, dadurch gekennzeichnet, daß die Gegenstände maschinell gereinigt werden.

8. Verfahren nach einem oder mehreren der Ansprüche 1 bis 7, dadurch gekennzeichnet, daß die Gegenstände medizinische Instrumente (20) sind.

9. Verfahren nach Anspruch 8, dadurch gekennzeichnet, daß die medizinischen Instrumente Rohrschaftinstrumente für die minimalinvasive Chirurgie sind.

10. Verfahren nach einem oder mehreren der Ansprüche 1 bis 7, dadurch gekennzeichnet, daß die Gegenstände Teile von lebensmittelverarbeitenden Maschinen sind.

11. Verfahren nach einem oder mehreren der Ansprüche 1 bis 7, dadurch gekennzeichnet, daß die Gegenstände Teile von pharmazeutischen Anlagen sind.

12. Verwendung des Verfahrens nach einem oder mehreren der Ansprüche 1 bis 10 zum Optimieren der konstruktiv bedingten Reinigungsfähigkeit von medizinischen Instrumenten (20).

13. Verwendung des Verfahrens nach einem oder mehreren der Ansprüche 7 bis 11 zum Optimieren des konstruktiv bedingten Reinigungsverhaltens von Waschmaschinen (26).

14. Verwendung des Verfahrens nach einem oder mehreren der Ansprüche 1 bis 11 zum Optimieren von Reinigungsmitteln.

15. Verwendung des Verfahrens nach einem oder mehreren der Ansprüche 1 bis 11 zur Validierung von Reinigungsprozessen.

Fig. 1A

Fig. 1B

Fig. 1C

Fig. 1D

Fig. 1E

Fig. 1F

Fig. 1G

Fig. 2

Europäisches
Patentamt

**EUROPÄISCHER RECHERCHENBERICHT**

Nummer der Anmeldung

EP 97 11 3461

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 3 546 464 A (GLASS ALFRED L) <br> * das ganze Dokument * <br> --- | 1,2 | G01N23/00 |
| A | MOSTAFA A.B.G.H., CHACKETT K.F.: <br> "RADIOACTIVE TRACERS IN THE ASSESSMENT OF CLEANING OF SURGICAL APPLIANCES" <br> INTERNATIONAL JOURNAL OF APPLIED RADIATION AND ISOTOPES, <br> Bd. 26, Nr. 11, 1975, <br> Seiten 651-655, XP002046771 <br> * Seite 651 * <br> * Seite 654 * <br> --- | 1,2,8 | |
| D,A | H. SCHRIMM ET AL.: "EINE NEUE METHODE ZUR VALIDIERUNG UND ÜBERPRÜFUNG DER REINIGUNG VON ROHRSCHAFTINSTRUMENTEN" <br> DE-Z-ZENTRAL STERILISATION, <br> Bd. 2, 1994, <br> Seiten 313-324, XP002046772 <br> * das ganze Dokument * <br> --- | 1-9, 12-15 | |
| A | PATENT ABSTRACTS OF JAPAN <br> vol. 013, no. 157 (P-857), 17.April 1989 <br> & JP 63 315953 A (TOKUO OSADA;OTHERS: 01), 23.Dezember 1988, <br> * Zusammenfassung * <br> --- | 1,2 | **RECHERCHIERTE SACHGEBIETE (Int.Cl.6)** <br> G01N |
| A | EP 0 603 563 A (GEHRIG & CO AG) <br> * Zusammenfassung * <br> --- | 1,2,8,9 | |
| A | US 3 242 338 A (DANFORTH ET AL.) <br> * Ansprüche 1,2 * <br> ----- | 1,2 | |

Der vorliegende Recherchenbericht wurde für alle Patentansprüche erstellt

| Recherchenort | Abschlußdatum der Recherche | Prüfer |
|---|---|---|
| DEN HAAG | 13.November 1997 | Deroubaix, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie,übereinstimmendes Dokument

EPO FORM 1503 03.82 (P04C03)